(19) **Europäisches Patentamt**

**European Patent Office**

**Office européen des brevets**

(11) **EP 1 258 556 B1**

(12) **EUROPÄISCHE PATENTSCHRIFT**

(45) Veröffentlichungstag und Bekanntmachung des Hinweises auf die Patenterteilung:
**15.09.2004   Patentblatt 2004/38**

(51) Int Cl.⁷: **D06F 39/00**, D06F 37/20
// F16F7/08

(21) Anmeldenummer: **02008555.1**

(22) Anmeldetag: **16.04.2002**

(54) **Waschmaschine mit einer Einrichtung und Verfahren zur Bestimmung des Wäschegewichts**

Washing machine with a device and a process for determining the laundry weight

Machine à laver avec un dispositif et un procédé pour déterminer le poids du linge

(84) Benannte Vertragsstaaten:
**AT BE CH CY DE DK ES FI FR GB GR IE IT LI LU MC NL PT SE TR**

(30) Priorität: **10.05.2001   DE 10122749**

(43) Veröffentlichungstag der Anmeldung:
**20.11.2002   Patentblatt 2002/47**

(73) Patentinhaber: **Miele & Cie. KG**
**33332 Gütersloh (DE)**

(72) Erfinder: **Bicker, Rainer**
**33334 Gütersloh (DE)**

(56) Entgegenhaltungen:
**EP-A- 0 984 092         DE-A- 10 046 712**

**Beschreibung**

Die Erfindung betrifft eine Waschmaschine mit einem Laugenbehälter, in dem eine Trommel zur Aufnahme von Waschgut drehbar gelagert ist, mit einem Gehäuse, in dem der Laugenbehälter im oberen Bereich an Federn aufgehängt und im unteren Bereich über Stoßdämpfer abgestützt ist, wobei als Stoßdämpfer Reibungsdämpfer verwendet werden, die aus einem zylindrischen Gehäuse und einer koaxial zur Gehäuselängsachse angeordneten, in diesem bewegbaren Kolbenstange bestehen, und bei denen Reibbeläge auf einem Belagblock auf der Kolbenstange zwischen zwei Anschlägen und diesen zugeordneten Federelementen beweglich angeordnet sind und mit einem System zur Bestimmung des Gewichts der in der Trommel vorhandenen Wäsche, welches eine Messeinrichtung zur Ermittlung der gewichtskraftbedingten Absenkung des Laugenbehälters beinhaltet. Darüber hinaus betrifft die Erfindung ein Verfahren zur Bestimmung des Gewichts der in der Trommel vorhandenen Wäsche in einer solchen Waschmaschine.

Eine Waschmaschine mit einem System zur Bestimmung des Gewichts der in der Trommel vorhandenen Wäsche wird beispielsweise unter der Bezeichnung W 377 WPS von der Anmelderin hergestellt und vertrieben. Sie ist auch aus der DE 199 46 245 A1 bekannt. Bei diesen Waschmaschinen ist parallel zum Stoßdämpfer ein Wegsensor angeordnet. Der Laugenbehälter mit der darin drehbar gelagerten Trommel ist über Federn mit dem Gehäuse verbunden. Sobald das Waschgut in die Trommel gelegt wird, ändert sich die Gesamtmasse des Laugenbehälters. Durch die größer werdende Masse werden die Federn weiter gedehnt, so dass der Laugenbehälter um so tiefer hängt, je größer die Masse der eingefüllten Wäsche ist. Die neue Höhenlage des Laugenbehälters wird mit dem Wegsensor ermittelt. Damit liefert der Wegsensor ein Signal, dessen Differenz zur Nulllage (unbeladene Trommel) proportional zu der eingefüllten Wäschemenge ist.

Für den Schleuderbetrieb der Waschmaschine muss sichergestellt werden, dass die Schwingamplitude beim Durchgang durch den kritischen Drehzahlbereich (Resonanz des Feder-Masse-Systems, bestehend aus den Federn und der Masse des gefüllten Laugenbehälters) begrenzt wird. Dafür sorgen Stoßdämpfer zwischen dem Laugenbehälter und dem Gehäuseboden. Das Wiegen der Wäsche erfolgt bei stillstehendem Laugenbehälter. Hier dürfen die Dämpfer keine Kräfte aufbringen, da sonst die Dämpferkraft während des Beladens mit Wäsche erst durch die Gewichtskraft der Wäsche überwunden werden muss, um überhaupt ein Absinken des Laugenbehälters und damit ein mit dem Wegsensor messbares Wegsignal zu ermöglichen. Es werden deshalb bei der W 377 Öl-Hydraulik-Dämpfer mit geschwindigkeitsproportionaler Dämpfkraft eingesetzt, die nur eine sehr geringe Dämpfkraft besitzen, wenn sie nicht bewegt werden (wünschenswert wäre gar keine Dämpfung). Erst wenn der Laugenbehälter auslenkt, treten Geschwindigkeiten auf, die dazu führen, dass Gegenkräfte entstehen und so die Schwingamplitude begrenzt wird. Nachteile der Öl-Hydraulik-Dämpfer sind ihr hoher Preis, eine geringe Dämpfung, akustische Probleme und geringe Umweltverträglichkeit (das Öl muss entsorgt werden).

Aus der DE 40 18 599 A1 ist ein sogenannter Federkolbendämpfer bekannt. Hierbei handelt es sich um einen Reibungsdämpfer, bei dem der Reibbelag auf der Kolbenstange zwischen zwei Federelementen beweglich angeordnet ist, wobei sich die Federelemente jeweils an einem mit der Kolbenstange verbundenen Anschlag abstützen. Hierdurch entsteht ein amplitudenabhängiges Dämpfungsverhalten.

Aus der DE 100 46 712 A1 ist der Einsatz eines Federkolbendämpfers in Verbindung mit einem Wegsensor bekannt. Hier wird eingeräumt, dass mit einer solchen Messeinrichtung das Wäschegewicht nur ermittelt werden kann, wenn die Messung im haftreibungsfreien Hub erfolgt.

Der Federkolbendämpfer besitzt in einem Messsystem mit nur einem Wegsensor folgende Nachteile:

- Liegt die auf den Federkolbendämpfer einwirkende Kraft zu Beginn des Beladens nahe an der Reibkraft, so reicht eine geringe zusätzliche Gewichtskraft durch das eingefüllte Waschgut, damit der Reibbelag verrutscht und damit der lineare Bereich verlassen wird.
- Der Anfangszustand ist nicht definiert. Ist die Trommel leer, so besteht die Möglichkeit, dass die Reibbeläge sich in einer Position befinden, die nicht der Nulllage des Laugenbehälters entspricht. Die Federn üben dann eine Kraft auf den Laugenbehälter aus, die unterhalb der Reibkraft des Reibbelags liegt. Damit gibt es eine undefinierte Kraft, die als Offset auf das System wirkt und eine zusätzliche Ausdehnung der Federn, in die das Aggregat eingehängt ist, verursacht. Der Weg der Federn geht wiederum in den mit dem Wegsensor gemessenen Weg ein. Eine absolute Bestimmung der Masse des eingefüllten Waschguts wie bei Einsatz der Geschwindigkeits-proportionalen Dämpfer (z.B. Öl-Hydraulik-Dämpfer) ist daher nicht mehr möglich. Das bedeutet, dass die Wäschemenge nur bestimmt werden kann, wenn die Waschtrommel zunächst leer ist und dann gefüllt wird. Wird aber der Waschautomat in ausgeschaltetem Zustand als Wäschesammler benutzt, so ist es nicht möglich, den Waschautomaten anschließend einzuschalten und die Wäschemenge korrekt abzulesen. Der Gebrauchsnutzen wird damit eingeschränkt.

Der Erfindung stellt sich das Problem, bei einer Waschmaschine der eingangs genannten Art trotz Einsatz eines Reibungsdämpfers eine genaue und immer zuverlässige Bestimmung des Wäschegewichts zu ermöglichen.

Erfindungsgemäß wird dieses Problem bei einer eingangs beschriebenen Waschmaschine durch eine zweite Messeinrichtung zur Ermittlung der Auslenkung zwischen dem Belagblock und einem Befestigungselement an der Kolbenstange oder zwischen dem Belagblock und einem Befestigungs punkt am Boden des Dämpfergehäuses gelöst.

Dabei wird angenommen, dass die Reibbeläge aller Dämpfer sich in den gleichen Positionen befinden. Andernfalls muss jedem Dämpfer ein solcher Wegsensor zugeordnet werden. Diese Messeinrichtungen können vorteilhaft in den Federkolbendämpfer integriert werden. Hierdurch wird ein platzsparender Aufbau erreicht.

Gegenstand eines weiteren Anspruchs ist ein Verfahren zur Bestimmung des Gewichts der in der Trommel vorhandenen Wäsche in einer Waschmaschine mit einer Messeinrichtung zur Ermittlung der gewichtskraftbedingten Absenkung des Laugenbehälters und mit einer zweiten Messeinrichtung zur Ermittlung der Auslenkung zwischen dem Belagblock und einem Befestigungselement an der Kolbenstange oder zwischen dem Belagblock und einem Befestigungs punkt am Boden des Dämpfergehäuses. Ein solches Verfahren ist dadurch gekennzeichnet, dass die erste Messeinrichtung die gewichtskraftbedingte Absenkung des Laugenbehälters ermittelt, die zweite Messeinrichtung die Auslenkung zwischen dem Belagblock und einem Befestigungselement an der Kolbenstange oder zwischen dem Belagblock und einem Befestigungs punkt am Boden des Dämpfergehäuses ermittelt und dann eine Auswerteschaltung aus diesen Messwerten und den Federkonstanten der Federn und der(des) Federelemente(s) das Gewicht der Wäsche berechnet.

Ein Ausführungsbeispiel der Erfindung ist in den Zeichnungen rein schematisch dargestellt und wird nachfolgend näher beschrieben. Es zeigt

Figur 1     die Schemaskizze einer erfindungsgemäß aufgebauten Waschmaschine
Figur 2     die Schemaskizze eines Schnitts durch einen Federkolbendämpfer
Figur 3     das Kraft-Weg-Diagramm eines Federkolbendämpfers
Figur 4     ein physikalisches Modell des Laugenbehälters
Figur 5     die Schemaskizze eines Schnitts durch einen Federkolbendämpfer mit Wegsensor

Der Laugenbehälter (4) einer Waschmaschine mit der darin drehbar gelagerten Trommel (5) ist an Federn (2, 3) im oberen Bereich (1a) des Gehäuses (1) aufgehängt. Sobald Waschgut (6) in die Trommel (5) gelegt wird, ändert sich die Gesamtmasse des Laugenbehälters (4), die aus der Masse $m_{Lb}$ des leeren Laugenbehälters (4) und der Masse $m_w$ des Waschguts (6) zusammengesetzt ist. Durch Massezunahme werden die Federn (2, 3) weiter gedehnt, so dass der Laugenbehälter (4) um so tiefer hängt, je größer die Masse der eingefüllten Wäsche ist. Die gewichtskraftbedingte Absenkung ($\Delta s_1$) des Laugenbehälters (4) wird mit einem Wegsensor (9) ermittelt. Damit liefert der Wegsensor (9) ein Signal an eine Auswerteschaltung MC, das proportional zu der eingefüllten Wäschemenge $m_w$ ist.

Für den Schleuderbetrieb des Waschautomaten muss sichergestellt werden, dass die Schwingamplitude beim Durchgang durch den kritischen Drehzahlbereich (Resonanz des Feder-Masse-Systems bestehend aus den Federn (2, 3) und der Masse des gefüllten Laugenbehälters (4)) begrenzt wird. Dafür sorgen zwei Dämpfer (7, 8), die als Federkolbendämpfer ausgebildet und zwischen dem Laugenbehälter (4) und Gehäuseboden (1b) angeordnet sind.

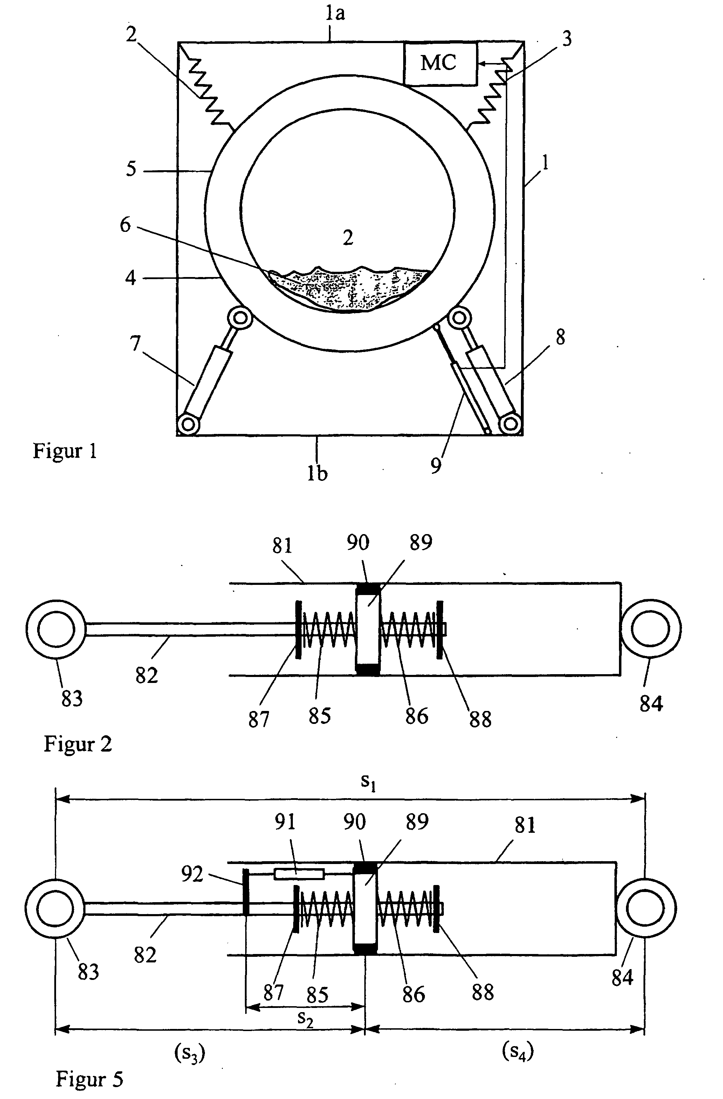

Figur 2 zeigt einen herkömmlichen Federkolbendämpfer (80), wie er beispielsweise aus der DE 40 18 599 A1 bekannt ist. Er besteht aus einem zylindrischen Dämpfergehäuse (81) und einer darin angeordneten, in Axialrichtung des Dämpfergehäuses (81) verschiebbaren Kolbenstange (82). Mit dem Befestigungspunkt (83) wird die Kolbenstange (82) am Laugenbehälter (4) befestigt, mit dem Befestigungspunkt (84) das Dämpfergehäuse (81) am Gehäuseboden (1b). Die Kolbenstange (82) besitzt zwei angeformte Federteller (87, 88). Zwischen diesen sind zwei Federelemente (85, 86) über die Kolbenstange (82) geschoben, die zwischen sich einen Belagblock (89) einklemmen. Auf dem Belagblock (89) sind Reibbeläge (90) angebracht, die sich an der Innenwand des Dämpfergehäuses (81) abstützen. Eine Bewegung des Laugenbehälters (4) wird von der Kolbenstange (82) auf die beiden Federteller (87, 88) übertragen. Diese übertragen die Bewegung weiter auf die Federelemente (85, 86), welche wiederum die Kräfte auf den beweglich gelagerten Belagblock (89) übertragen. Bei einer Bewegung der Kolbenstange (82) werden zunächst die Federelemente (85, 86) in der entsprechenden Richtung entlastet bzw. zusammengedrückt. Sobald die aufgebaute Kraft so groß ist, dass die Reibkraft überwunden werden kann, bewegt sich der Belagblock (89) mit den Reibbelägen (90) mit.

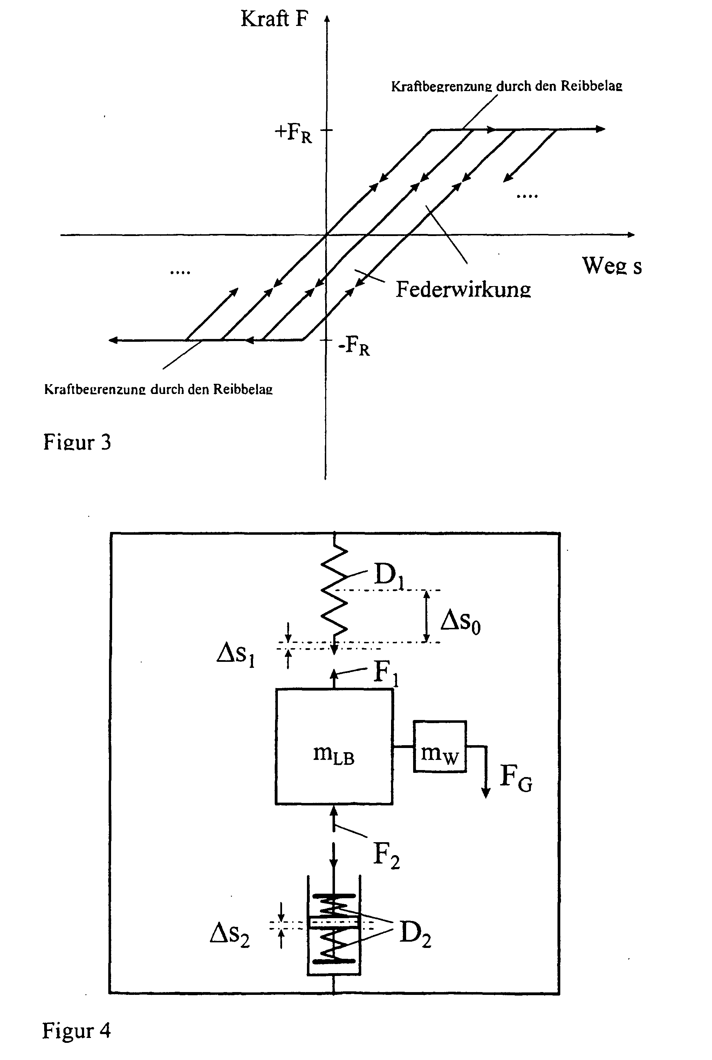

Figur 3 zeigt das idealisierte Kraft-Weg-Diagramm des Federkolbendämpfers. Der Unterschied zu einem einfachen Reibungsdämpfer besteht darin, dass schon bei Einleitung kleinerer Kräfte F, die zwischen $F_R$ und $-F_R$ liegen, Wege s zurückgelegt werden. Durch die Federelemente entsteht ein Übergangsbereich, in dem der Dämpfer linear arbeitet.

In Figur 4 werden die Kräfte, die an einem in Federn eingehängten Laugenbehälter wirken, betrachtet:
Der Laugenbehälter wird durch die Federn, in denen er eingehängt ist, mit der Federkraft $F_1$ nach oben gezogen. Dieser Kraft wirkt der Gewichtskraft des mit Wäsche gefüllten Laugenbehälters entgegen.

$$F_G = (m_{Lb} + m_w) \cdot g$$

$g$     *Gravitationskonstante g = 9,81m/s$^2$*
$m_{Lb}$    *Masse des Laugenbehälters*
$m_w$    *Masse der Wäsche*

Außerdem wirkt die Kraft $F_2$ vom Federkolbendämpfer auf den Laugenbehälter. Je nach Stellung des Reibbelages kann diese Kraft den Laugenbehälter nach oben drücken oder nach unten ziehen. Für die nachfolgenden Betrachtungen wird eine nach oben gerichtete Kraft $F_2$ angenommen. Für den Fall, dass $F_2$ nach unten gerichtet ist, ist das Vorzeichen umzukehren ($F_2 < 0$). Somit greifen die nach oben gerichteten Kräfte $F_1$ und $F_2$ und die nach unten gerichteten Gewichtskräfte am Laugenbehälter an. Im Sinne des Gleichgewichts der Kräfte ergibt sich

$$F_1 + F_2 \, (m_{Lb} + m_w) \cdot g = 0 \tag{1}$$

$$m_w = \frac{F_1 + F_2}{g} - m_{Lb} \tag{2}$$

Damit wird deutlich, dass durch die Ermittlung der Kraftdifferenz immer auch die Wäschemasse bestimmt werden kann. Bei Einsatz des Wegsensors wird eine indirekte Messung der Kraft $F_1$ über die Dehnung der Feder, in der der Laugenbehälter eingehängt ist, vorgenommen. Die Kraft $F_1$ bewirkt an den Federn eine Absenkung $\Delta s_{ges}$. Daraus folgt

$$F_1 = D_1 \cdot \Delta s_{ges} = D_1 \cdot \Delta s_0 + D_1 \cdot \Delta s_1 = m_{Lb} \cdot g + D_1 \cdot \Delta s_1 \tag{3}$$

$D_1$    *Federkonstante aller Federn zur Aufhängung des Laugenbehälters*
$\Delta s_0$    *Absenkung durch die Masse des leeren Laugenbehälters*
$\Delta s_1$    *Absenkung durch die Wäschemasse*

Die Kraft F2 bewirkt eine Auslenkung $\Delta s_2$ der Federelemente in den Federkolbendämpfern. Daraus folgt

$$F_2 = D_2 \cdot \Delta s_2 \tag{4}$$

$D_2$    *Federkonstante aller Federelemente in den Dämpfern Dämpfern*
$\Delta s_2$    *Auslenkung der Federelemente in den Dämpfern*

Setzt man die Gleichungen (3) und (4) in (1) ein, so erhält man

$$m_w = (D_1 \cdot \Delta s_1 + D_2 \cdot \Delta s_2)/g \tag{5}$$

Da $D_{1,2}$ und g Konstanten sind, müssen zur genauen Ermittlung des Wäschegewichts bei Waschmaschinen mit Federkolbendämpfern also die Absenkung $\Delta s_1$ des Laugenbehälters 4 und die Auslenkung der Federelemente $\Delta s_2$ mit Wegsensoren gemessen werden. Diese Messwerte werden einer Auswerteschaltung MC zugeführt, die dann aus diesen Messwerten und den Federkonstanten der Federn und der Federelemente das Gewicht der Wäsche berechnet. Geht man bei einem Einsatz von mehreren Dämpfern davon aus, dass sich die Federelemente und Reibbeläge gleich verhalten, so reicht ein zusätzlicher Wegsensor zur Ermittlung der Auslenkung der Federelemente $\Delta s_2$ aus. Andernfalls muss jedem Dämpfer ein solcher Sensor zugeordnet werden.

Figur 5 zeigt einen Federkolbendämpfer, mit dem die Ermittlung der Auslenkung $\Delta s_2$ mindestens eines Federelements (85, 86) möglich ist. Hierzu ist zwischen dem Belagblock (89) und einem Befestigungselement (92) an der Kolbenstange (82) ein weiterer Wegsensor (91) angeordnet. Es wird vorteilhafterweise ein optischer Sensor eingesetzt. Alternativ zur Messung der Auslenkung $\Delta s_2$ der Federelemente (85, 86) kann auch die Wegdifferenz $\Delta s_3$ zwischen Laugenbehälter (4) bzw. dem Befestigungspunkt (83) und dem Belagblock (89) ermittelt werden. Es ist auch möglich, anstelle des Wegsensors (9) zur Ermittlung der Absenkung $\Delta s_1$ des Laugenbehälters einen Wegsensor (nicht dargestellt) in den Federkolbendämpfer zu integrieren, der die Auslenkung $\Delta s_4$ zwischen dem Belagblock (89) und dem Gehäuseboden (1b), dem Boden des Dämpfergehäuses (81) oder dem Befestigungspunkt (84) misst. Alternativ kann dieser integrierte Sensor die Auslenkung $\Delta s_1$ zwischen der Kolbenstange (82) und dem Dämpferrohr (81) messen. Es bestehen die Relationen

$$\Delta s_2 = \Delta s_3$$

$$\Delta s_1 = \Delta_2 + \Delta s_4$$

**Patentansprüche**

1. Waschmaschine mit einem Laugenbehälter (4), in dem eine Trommel (5) zur Aufnahme von Waschgut (6) drehbar gelagert ist, mit einem Gehäuse (1), in dem der Laugenbehälter (4) im oberen Bereich (1a) an Federn (2, 3) aufgehängt und im unteren Bereich über Stoßdämpfer (7, 8) abgestützt ist, wobei als Stoßdämpfer Reibungsdämpfer verwendet werden, die aus einem zylindrischen Gehäuse (81) und einer koaxial zur Gehäuselängsachse angeordneten, in diesem bewegbaren Kolbenstange (82) bestehen, und bei denen Reibbeläge (90) auf einem Belagblock (89) auf der Kolbenstange (82) zwischen zwei Anschlägen (87, 88) und diesen zugeordneten Federelementen (85, 86) beweglich angeordnet sind und mit einem System zur Bestimmung des Gewichts der in der Trommel vorhandenen Wäsche, welches eine Messeinrichtung (9) zur Ermittlung der gewichtskraftbedingten Absenkung des Laugenbehälters (4) beinhaltet,
**gekennzeichnet durch** eine zweite Messeinrichtung (91) zur Ermittlung der Auslenkung zwischen dem Belagblock (89) und einem Befestigungselement (92) an der Kolbenstange oder zwischen dem Belagblock (89) und einem Befestigungspunkt (84) am Boden des Dämpfergehäuses.

2. Waschmaschine nach Anspruch 1
**dadurch gekennzeichnet,**
**dass** die Messeinrichtung (9) und/oder die zweite Messeinrichtung (91) im Reibungsdämpfer integriert ist/sind.

3. Verfahren zur Bestimmung des Gewichts der in der Trommel vorhandenen Wäsche in einer Waschmaschine nach Anspruch 1 oder 2, wobei

   • die erste Messeinrichtung (91) die gewichtskraftbedingte Absenkung des Laugenbehälters (4) ermittelt;
   • die zweite Messeinrichtung die Auslenkung zwischen dem Belagblock (89) und einem Befestigungselement (92) an der Kolbenstange oder zwischen dem Belagblock (89) und einem Befestigungspunkt (84) am Boden des Dämpfergehäuses ermittelt;
   • eine Auswerteschaltung aus diesen Messwerten und den Federkonstanten der Federn und der(des) Federelemente(s) das Gewicht der Wäsche berechnet.

**Claims**

1. Washing machine having a detergent solution container (4) in which a drum (5) for receiving washing (6) is mounted rotatably, having a housing (1), in which the detergent solution container (4) is suspended in the upper region (1a) on springs (2, 3) and is supported in the lower region via shock absorbers (7, 8), frictional dampers being used as shock absorbers, said dampers comprising a cylindrical housing (81) and a piston rod (82), which is disposed coaxially to the housing longitudinal axis and is movable in the latter, and in the case of which friction linings (90) are disposed movably on a lining block (89) on the piston rod (82) between two stop members (87, 88) and spring elements (85, 86) associated therewith, and having a system for determining the weight of the washing present in the drum, which system includes a measuring device (9) for determining the weight-caused lowering of the detergent solution container (4),
**characterised by** a second measuring device (91) for determining the excursion between the lining block (89) and an attachment element (92) on the piston rod or between the lining block (89) and an attachment point (84) on the base of the damper housing.

**2.** Washing machine according to claim 1,
**characterised in that**
the measuring device (9) and/or the second measuring device (91), is/are integrated in the frictional damper.

**3.** Method of determining the weight of the washing present in the drum in a washing machine according to claim 1 or 2, wherein

- the first measuring device (91) determines the weight-caused lowering of the detergent solution container (4);

- the second measuring device determines the excursion between the lining block (89) and an attachment element (92) on the piston rod or between the lining block (89) and an attachment point (84) on the base of the damper housing;

- an evaluation circuit calculates the weight of the washing from these measuring values and the spring constants of the springs and of the spring element(s).


**Revendications**

**1.** Lave-linge comprenant une cuve de lessive (4) dans laquelle est monté de façon rotative un tambour (5) renfermant du linge (6), une carcasse (1) dans la partie supérieure (1a) de laquelle la cuve de lessive (4) est suspendue par des ressorts (2, 3) et dans la partie inférieure de laquelle ladite cuve de lessive prend appui sur des amortisseurs (7, 8), sachant que les amortisseurs employés sont des amortisseurs à friction qui sont composés d'un cylindre (81) et d'une tige de piston (82) coaxiale par rapport à l'axe longitudinal du cylindre et mobile à l'intérieur de ce dernier, et dans le cas desquels des garnitures de friction (90) et des éléments à ressort (85, 86) associés à ces dernières sont disposés sur un support de garniture (89) monté sur la tige de piston (82) de façon à pouvoir se déplacer entre deux butées (87, 88) et deux éléments à ressort (85, 86) associés à celles-ci, et comprenant également un système pour mesurer le poids du linge présent dans le tambour qui consiste en un dispositif de mesure pour déterminer l'abaissement de la cuve de lessive (4) dû au poids du linge, **caractérisé par** un second dispositif de mesure (91) pour déterminer l'écart entre le support de garniture (89) et un élément de fixation (92) sur la tige de piston ou entre le support de garniture (89) et un point de fixation (84) sur le fond du carter de l'amortisseur.

**2.** Lave-linge selon la revendication 1, **caractérisé en ce que** le dispositif de mesure (9) et/ou le second dispositif de mesure (91) est (sont) intégré(s) dans l'amortisseur à friction.

**3.** Procédé pour déterminer le poids du longe présent dans le tambour d'un lave-linge selon la revendication 1 ou 2, sachant que

- le premier dispositif de mesure (91) détermine l'abaissement de la cuve de lessive (4) dû au poids du linge;
- le second dispositif de mesure relève l'écart entre un support de garniture (89) et un élément de fixation (92) sur la tige de piston ou entre le support de garniture (89) et un point de fixation (84) sur le fond du cylindre de l'amortisseur ;
- un circuit d'interprétation calcule le poids du linge à partir de ces valeurs mesurées et des constantes de rappel des ressorts et de l'élément (des éléments) à ressort.

Figur 1

Figur 2

Figur 5

Kraft F

Kraftbegrenzung durch den Reibbelag

$+F_R$

....

Weg s

....

Federwirkung

$-F_R$

Kraftbegrenzung durch den Reibbelag

Figur 3

$D_1$

$\Delta s_0$

$\Delta s_1$

$F_1$

$m_{LB}$     $m_W$     $F_G$

$F_2$

$\Delta s_2$     $D_2$

Figur 4